# EUROPEAN PATENT APPLICATION

(11) **EP 4 752 177 A1**
(43) Date of publication of application: **03.06.2026**
(21) Application number: 24216630.4
(22) Date of filing: 29.11.2024
(51) Int. Cl.: C09D 5/24, C08G 18/58, C09D 7/61, C09D 7/63, C09D 163/00, E04F 15/00

(54) **ELECTRICALLY CONDUCTIVE EPOXY RESIN COATING CONTAINING CARBON NANOTUBES AND ELECTROSTATICALLY DISSIPATIVE FLOOR WITH IMPROVED FLEXIBILITY**

(71) Applicant: Sika Technology AG, 6340 Baar (CH)
(72) Inventor: LAUBER, Lina, 70439 Stuttgart (DE); SARIOGLU, Oguz, 70439 Stuttgart (DE); VIAS PARRADO, Ana, 70439 Stuttgart (DE)
(74) Representative: Sika Patent Attorneys

(57) **Abstract**

The invention relates to an electrically conductive epoxy resin coating comprising liquid epoxy resin, a curing agent for the epoxy resin, carbon nanotubes CNT, a blocked isocyanate prepolymer BIP, a polyol ester PE having at least three (meth)acrylate ester groups and a reactive diluent RD. The electrically conductive epoxy resin coating has suitable electrical resistance, is easy to apply, shows an aesthetically pleasing surface and displays high impact resistance.

## Description

### Technical field

The invention relates to electrically conductive epoxy resin coatings and to the use thereof in electrostatically dissipative floors.

### Prior art

Electrostatically dissipative floors, also called ESD floors, are known. They serve to dissipate electrostatic charges that arise in a room, for example as a result of foot traffic or wheeled traffic, via footwear and the floor to a grounding. This avoids spontaneous electrostatic discharges which can lead to defects or faults in the production or handling of sensitive products or instruments.

An electrostatically dissipative floor must have sufficiently low electrical resistance to ground that charges are reliably dissipated but must only be dissipative to such a degree that there is no risk to the health of persons in the event of contact with electrical current. There are standards for such floors that describe test methods for electrostatic and electrical characteristics. DIN EN 61340-4-1 describes, for example, a test method for determination of the electrical resistance of floor coverings and laid floors, and DIN EN 61340-4-5 assesses electrostatic safety with regard to electrical resistance and the degree to which people, footwear and floor coverings can become charged in combination.

Epoxy resin-based floors are particularly robust in relation to mechanical stress and stability toward many substances. They are therefore particularly suitable for highly demanding industrial production rooms. An epoxy resin-based electrostatically dissipative floor system must achieve a series of properties. It is to form reliable adhesion on different substrates and be installable with minimum complexity. The electrostatic charges absorbent by the floor are to be reliably dissipated downward. For this purpose, what is called a conduction system comprising copper ribbons or wires connected to a grounding is laid beneath the coating. After the curing, the coated floor is to have an electrical resistance in the range from about 10⁵ to 10⁸ ohms and is to be robust and durable. The epoxy resin coating is to be readily installable and compatible with the underlying conduction system and, after curing, is to have an aesthetically pleasing uniform surface with high hardness coupled with high impact resistance.

In order to achieve said impact resistance, thinners like benzyl alcohol and/or plasticizers are typically used. However, in applications like clean rooms, said additives cannot be used since they can emit from the cured flooring system into the ambient surrounding and get detected in emission measurements.

Floors made from synthetic resins such as epoxy resins are insulators. There are various ways of achieving electrical conductivity. A known way is to use ionic liquids or organic salts soluble in the synthetic resin matrix, which provide electrical conductivity. For example, WO 2024020762 discloses an electrically conductive epoxy coating comprising the combination of carbon nanotubes with an alkylated quaternary ammonium salt of an ethyl sulfonate.

### Summary of the invention

It is therefore an object of the present invention to provide an electrically conductive epoxy resin coating having suitable electrical resistance, which is easy to apply, shows an aesthetically pleasing surface and displays high impact resistance.

Surprisingly, this object is achieved by the electrically conductive epoxy resin coating according to claim 1.

Further aspects of the invention are the subject of further independent claims. Particularly preferred embodiments of the invention are the subject of the dependent claims.

### Ways of executing the invention

The invention provides an electrically conductive epoxy resin coating comprising
- at least one liquid epoxy resin;
- carbon nanotubes **CNT,** preferably single walled carbon nanotubes (SWCNT), preferably 0.003 - 0.1 wt.-%, based on the total weight of the electrically conductive epoxy resin coating;
- at least one blocked isocyanate prepolymer **BIP,** preferably 1 - 7.5 wt.-%, based on the total weight of the electrically conductive epoxy resin coating;
- at least one polyol ester **PE** having at least three (meth)acrylate ester groups, preferably 1 - 7.5 wt.-%, based on the total weight of the electrically conductive epoxy resin coating;
- at least one reactive diluent **RD,** preferably 3 - 17.5 wt.-%, based on the total weight of the electrically conductive epoxy resin coating;
- preferably at least one epoxy-modified plant oil **EPO,** preferably 1.5 - 7.5 wt.-%, based on the total weight of the electrically conductive epoxy resin coating.

"Carbon nanotubes" refer to carbon tubes having a diameter in the nanometer range, especially in the range from 1 to 50 nm, and a wall composed of one or more plies of graphene, i.e. carbon having carbon atoms arranged in rings. A composition is referred to as "storage-stable" when it can be stored at room temperature in a suitable container over a prolonged period, typically over at least 3 months up to 6 months or more, without this storage resulting in any change in its application or use properties to an extent relevant to its use.

A "thinner" refers to a substance that is soluble in an epoxy resin and lowers its viscosity, and that is not chemically incorporated into the epoxy resin polymer during the curing process.

"Liquid epoxy resin" refers to an industrial polyepoxide having a glass transition temperature below 25°C.

"Molecular weight" refers to the molar mass (in grams per mole) of a molecule. "Average molecular weight" refers to the number average Mₙ of a polydisperse mixture of oligomeric or polymeric molecules. It is determined by gel-permeation chromatography (GPC) against polystyrene as standard.

"Pot life" refers to the period of time from the mixing of the components of an epoxy resin composition within which the composition can be processed without losses.

A "primary amino group" refers to an amino group that is attached to a single organic radical and bears two hydrogen atoms; a "secondary amino group" refers to an amino group that is attached to two organic radicals, which may also together be part of a ring, and bears one hydrogen atom; and a "tertiary amino group" refers to an amino group that is attached to three organic radicals, two or three of which may also be part of one or more rings, and does not bear any hydrogen atoms.

"Amine hydrogen" refers to the hydrogen atoms of primary and secondary amino groups.

"Aliphatic" amine hydrogens refer to amino groups bonded to an aliphatic carbon atom.

"Amine hydrogen equivalent weight" refers to the mass of an amine or an amine-containing composition that contains one molar equivalent of amine hydrogen. Substance names beginning with "poly", such as polyamine or polyepoxide, refer to substances that formally contain two or more of the functional groups that occur in their name per molecule.

"Room temperature" refers to a temperature of 23°C.

Percentages by weight (% by weight), abbreviated to wt%, refer to proportions by mass of a constituent of a composition or a molecule, based on the overall composition or the overall molecule, unless stated otherwise. The terms "mass" and "weight" are used synonymously in the present document.

All industry standards and norms mentioned in this document relate to the versions valid at the date of first filing.

The electrically conductive epoxy resin coating comprises carbon nanotubes **CNT.**

Preferably, the amount of carbon nanotubes **CNT** in the range from 0.003 - 0.1 wt.-%, preferably 0.005 - 0.05 wt.-%, more preferably 0.0065 - 0.0125 wt.-%, based on the total weight of the electrically conductive epoxy resin coating. This is advantageous with respect to good values for electrical resistance, levelling and application behaviour and appearance of the cured coating.

Carbon nanotubes are produced industrially and are supplied commercially in various qualities. They have properties of interest for different areas of use. In particular, they are electrically conductive.

Preferably, the carbon nanotubes **CNT** are single walled carbon nanotubes (SWCNT).

They are preferably used in the form of a dispersion in a liquid carrier material, especially in a liquid having good compatibility with epoxy resin compositions, especially an alkyl glycidyl ether, a fatty acid ester or an ethoxylated alcohol.

Preference is given to a dispersion comprising 10% by weight of carbon nanotubes, especially in an alkyl glycidyl ether, especially a C₁₂ to C₁₄ alkyl glycidyl ether, as also used as reactive diluent for epoxy resins. Such a dispersion is commercially available, for example as Tuball^{®} Matrix 207 (from OCSiAl).

The electrically conductive epoxy resin coating comprises at least one blocked isocyanate prepolymer **BIP.** It was surprisingly found that the addition of said blocked isocyanate prepolymer **BIP** lead to an improved impact resistance. This can be seen, for example, in the comparison of E1 with R10 in table 1.

Preferably, the blocked isocyanate prepolymer **BIP** contains ether groups. More preferably, the blocked isocyanate prepolymer **BIP** is a blocked isocyanate-terminated polyether prepolymer, more preferably a blocked isocyanate-terminated polyoxyalkylene prepolymer.

Preferably, the blocked isocyanates are aromatic polyisocyanates, more preferably selected from the group consisting of 4,4'-diphenylene methane; 2,4 or 2,6 toluene or mixtures thereof; 4,4'-toluidine and 1 ,4-xylylene diisocyanates, preferably selected from 2,4 toluene, 2,6 toluene and mixtures thereof.

Preferably, the blocking agent for the blocked isocyanates is a phenol, preferably an alkylated phenol, preferably a phenol with an alkyl chain of 6 - 20, preferably 7 - 17 C-atoms, that can contain up to 3 double bonds. More preferably, the blocking agent is selected from nonylphenol, cardol and cardanol, preferably cardol and cardanol, most preferably cardanol.

Preferably, the blocked isocyanate prepolymer **BIP** contains from 1 % - 5 %, more preferred 1.5 % - 4 %, more preferably 2.5 % - 3 %, crosslinkable, blocked NCO groups.

Preferably, the blocked isocyanate prepolymer BIP has a viscosity at 25°C of 5 000 - 75 000 Pas, preferably 10 000 - 50 000 Pas, more preferably 12 000 - 40 000 Pas.

Preferably, the at least one blocked isocyanate prepolymer **BIP** is present in an amount in the range from 1 - 7.5 wt.-%, preferably 1.5 - 3 wt.-%, more preferably 1.75 - 2.5 wt.-%, based on the total weight of the electrically conductive epoxy resin coating. An amount of more than 7.5 wt.-% is disadvantageous with respect to sufficient hardness of the cured electrically conductive epoxy resin coating.

Such polymers are commercially available, for example, under the names Desmocap 11A, Desmocap 12A and Desmocap 14 CNB from Covestro.

The electrically conductive epoxy resin coating comprises at least one polyol ester **PE** having at least three (meth)acrylate ester groups. The expression "(meth)acrylate" is used herein to mean "acrylate or methacrylate or a mixture thereof". The polyol ester **PE** has at least 3, preferably from 3 to 6 such (meth)acrylate ester groups. It was surprisingly found that the addition of said polyol ester **PE** increases the conductivity of the epoxy resin coating as seen in the comparison of R7 and R8 with R1. In addition, the impact resistance is improved as shown in table 1 in the comparison of E1 with R9.

Preferably, the polyol ester **PE** having at least three (meth)acrylate ester groups is an alkoxylated polyol ester, preferably an ethoxylated or propoxylated polyol ester. This is advantageous with respect to improved impact resistance and electric conductivity as can be seen in table 1 in the comparison of R8 with R7.

More preferably, the polyol ester **PE** has at least three acrylate ester groups, preferably 3 or 4 acrylate ester groups, preferably 3 acrylate ester groups.

Preferred polyol esters **PE** are selected from the group consisting of glycerol triacrylate, glycerol trimethacrylate, sorbitol triacrylate, sorbitol trimethacrylate, trimethylolethane triacrylate, trimethylolethane trimethacrylate, trimethylolpropane triacrylate, dimethylolpropane tetraacrylate, dimethylolpropane tetramethacrylate, trimethylolpropane trimethacrylate, ethoxylated trimethylolpropane triacrylate, ethoxylated trimethylolpropane trimethacrylate, propoxylated trimethylolpropane triacrylate, propoxylated trimethylolpropane triamethacrylate, propoxylated glycerol triacrylate, propoxylated glycerol trimethacrylate, pentaerythritol triacrylate, pentaerythritol trimethacrylate, pentaerythritol tetraacrylate, pentaerythritol tetramethacrylate, dipentaerythritol hexaacrylate, dipentaerythritol hexamethacrylate, ethoxylated pentaerythritol tetraacrylate, propoxylated pentaerythritol tetraacrylate, sucrose pentaacrylate, sucrose pentamethacrylate, sucrose tetraacrylate, sucrose tetramethacrylate, sucrose triacrylate and sucrose trimethacrylate, preferably selected from trimethylolpropane triacrylate, ethoxylated trimethylolpropane triacrylate, propoxylated pentaerythritol tetraacrylate and propoxylated glycerol triacrylate most preferably propoxylated glycerol triacrylate.

Preferably, the polyol ester **PE** having at least three (meth)acrylate ester groups has a viscosity at 25 °C of 20 - 500 mPas, preferably 40 - 200 mPas, more preferably 60 - 120 mPas.

Preferably, the at least one polyol ester **PE** having at least three (meth)acrylate ester groups is present in an amount in the range from 1 - 7.5 wt.-%, preferably 1.5 - 3 wt.-%, more preferably 1.75 - 2.5 wt.-%, based on the total weight of the electrically conductive epoxy resin coating. An amount of more than 7.5 wt.-% is disadvantageous with respect to sufficient hardness of the cured electrically conductive epoxy resin coating.

The electrically conductive epoxy resin coating comprises at least one reactive diluent RD. The reactive diluent **RD** is preferably a poly(alkyleneglycol) diglycidylether, more preferably poly(propyleneglycol) diglycidylether.

More preferably, the reactive diluent **RD** is of the formula (II): 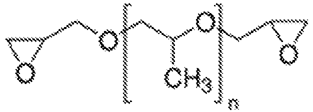 wherein the index n is from 3 to 25, preferably from 7 to 20, more preferably from 9 to 15.

Most preferred reactive diluent **RD** is selected from the formula (II) with the index n being 8 (Epilox P13-42) and the index n being 13 (Epilox M 985), preferably n is 13, both Epilox products above are available from Leuna - Harze GmbH.

Preferably, the reactive diluent **RD** has a viscosity at 25 °C of 10 - 500 mPas, preferably 20 - 200 mPas, more preferably 30 - 100 mPas.

Preferably, the reactive diluent **RD** has an EEW of 250 - 900 g/mol, preferably 350 - 750 g/mol, more preferably 400 - 550 g/mol.

Preferably, the reactive diluent **RD** is present in an amount in the range from 3 - 17.5 wt.-%, preferably 6-11 wt.-%, more preferably 7.5 - 9.5 wt.-%, based on the total weight of the electrically conductive epoxy resin coating. This is advantageous with respect to improved impact resistance as shown in table 1 in the comparison of R6 with R4 and R5. An amount of more than 17.5 wt.-% is disadvantageous with respect to sufficient hardness of the cured electrically conductive epoxy resin coating.

The electrically conductive epoxy resin coating preferably comprises at least one epoxy-modified plant oil **EPO.** It was surprisingly found said epoxy-modified plant oil **EPO** improves the aesthetic appearance of the cured epoxy resin coating. This can be seen, for example, in table 1 in the comparison of E1 with E2.

The epoxy-modified plant oil **EPO** may be any epoxy resin derived from plant oil, preferably selected from cardanol-modified epoxy resin, dimer-acid-modified epoxy resin, epoxidated soybean oil, epoxidated linseed oil, epoxidated castor oil and epoxidated palm oil, preferably cardanol-modified epoxy resin.

The cardanol in the cardanol-modified epoxy resin refers to a phenolic compound substituted with a long-chain unsaturated hydrocarbon group having 15 carbon atoms, and is obtained from cashew husk.

The epoxy-modified plant oil **EPO** is preferably a cardanol-modified epoxy resin having two or more epoxy groups per molecule, and more preferably a compound selected from formula (III) or formula (IV) shown below, most preferably formula (III):

| | |
|---|---|
| 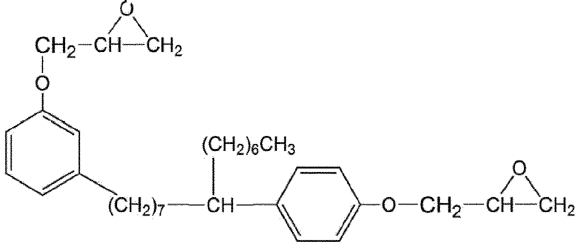 | (III) |
| 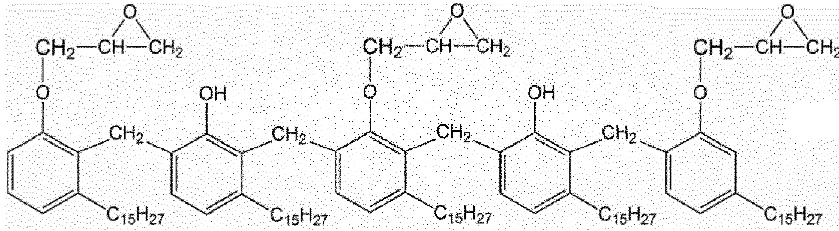 | (IV) |

Preferably, the epoxy-modified plant oil **EPO** has a viscosity at 25 °C of 2000 - 7000 mPas, preferably 3000 - 6000 mPas, more preferably 4000 - 5000 mPas.

Preferably, the epoxy equivalent weight of the epoxy-modified plant oil **EPO** is in the range of 100 to 750 g/ mol, more preferably in the range of 150 to 500 g/mol, and particularly preferably in the range of 250 to 350 g/mol.

Preferably, the epoxy-modified plant oil **EPO** is present in an amount in the range from 1.5 - 7.5 wt.-%, preferably 2.5 - 6.5 wt.-%, more preferably 3.5 - 5.5 wt.-%, based on the total weight of the electrically conductive epoxy resin coating. Said ranges are advantageous with respect to improved electrical conductivity, as seen, for example, in table 1 in the comparison of R3 with R1 and R3.

Examples of commercially available products of cardanol-modified epoxy resin include Cardolite NC-547, NC-514, NC-514S, and NC-514SE, manufactured by Cardolite Corporation.

The electrically conductive epoxy resin coating comprises at least one curing agent for the epoxy resin.

Preferred amines are especially amines having at least four aliphatic amine hydrogens.

Suitable amines having at least four aliphatic amine hydrogens are especially 2,2-dimethylpropane-1,3-diamine, pentane-1,3-diamine (DAMP), pentane-1,5-diamine, 1,5-diamino-2-methylpentane (MPMD), 2-butyl-2-ethylpentane-1,5-diamine (C11-neodiamine), hexane-1,6-diamine, 2,5-dimethylhexane-1,6-diamine, 2,2(4),4-trimethylhexane-1,6-diamine (TMD), heptane-1,7-diamine, octane-1,8-diamine, nonane-1,9-diamine, decane-1,10-diamine, undecane-1,11-diamine, dodecane-1,12-diamine, 1-amino-3-aminomethyl-3,5,5-trimethylcyclohexane (IPDA), 1,2-diaminocyclohexane, 1,3-diaminocyclohexane, 1,4-diaminocyclohexane, 1,3-bis(aminomethyl)cyclohexane, 1,4-bis(aminomethyl)cyclohexane, bis(4-aminocyclohexyl)methane, bis(4-amino-3-methylcyclohexyl)methane, bis(4-amino-3-ethylcyclohexyl)methane, bis(4-amino-3,5-dimethylcyclohexyl)methane, bis(4-amino-3-ethyl-5-methylcyclohexyl)methane, 2(4)-methyl-1,3-diaminocyclohexane, 2,5(2,6)-bis(aminomethyl)bicyclo[2.2.1]heptane (NBDA), 3(4),8(9)-bis(aminomethyl)tricyclo[5.2.1.0^{2,6}]decane, 1,4-diamino-2,2,6-trimethylcyclohexane (TMCDA), menthane-1,8-diamine, 3,9-bis(3-aminopropyl)-2,4,8,10-tetraoxaspiro[5.5]undecane, 1,3-bis(aminomethyl)benzene (MXDA), 1,4-bis(aminomethyl)benzene, bis(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine or higher oligomers of these diamines, bis(3-aminopropyl)polytetrahydrofurans or other polytetrahydrofurandiamines, polyoxyalkylenediamines or -triamines, especially polyoxypropylenediamines or polyoxypropylenetriamines such as Jeffamine^{®} D-230, Jeffamine^{®} D-400 or Jeffamine^{®} T-403 (all from Huntsman), diethylenetriamine (DETA), triethylenetetramine (TETA), tetraethylenepentamine (TEPA), pentaethylenehexamine (PEHA), dipropylenetriamine (DPTA), N-(2-aminoethyl)propane-1,3-diamine (N3 amine), N,N'-bis(3-aminopropyl)ethylenediamine (N4 amine), N,N'-bis(3-aminopropyl)-1,4-diaminobutane, N5-(3-aminopropyl)-2-methylpentane-1,5-diamine, N3-(3-aminopentyl)pentane-1,3-diamine, N5-(3-amino-1-ethylpropyl)-2-methylpentane-1,5-diamine, N,N'-bis(3-amino-1-ethylpropyl)-2-methylpentane-1,5-diamine, 3-(2-aminoethyl)aminopropylamine, bis(hexamethylene)triamine (BHMT), and also adducts of these amines with epoxy resins.

Said amines are preferably selected from the group consisting of TMD, IPDA, 1,2-diaminocyclohexane, 1,3-diaminocyclohexane, 1,4-diaminocyclohexane, 1,3-bis(aminomethyl)cyclohexane, 1,4-bis(aminomethyl)cyclohexane, bis(4-aminocyclohexyl)methane, 2(4)-methyl-1,3-diaminocyclohexane, MXDA, polyoxypropylenediamines having an average molecular weight Mₙ within a range from 200 to 500 g/mol, polyoxypropylenetriamines having an average molecular weight Mₙ within a range from 300 to 500 g/mol, BHMT, DETA, TETA, TEPA, PEHA, DPTA, N3 amine, N4 amine, adducts of IPDA, MXDA, DETA, TETA or TEPA with epoxy resins, and mixtures of two or more of the amines mentioned.

Particular preference is given to TMD, IPDA, 1,3-bis(aminomethyl)cyclohexane, 1,4-bis(aminomethyl)cyclohexane, MXDA, polyoxypropylenediamines having an average molecular weight Mₙ within a range from 200 to 500 g/mol, adducts of IPDA and/or MXDA with aromatic diepoxides or mixtures of two or more of the amines mentioned.

Further suitable amines are N-aminoethylpiperazine, 3-dimethylaminopropylamine (DMAPA), 3-(3-(dimethylamino)propylamino)propylamine (DMAPAPA), monoamines, polyamidoamines, especially reaction products of a mono- or polybasic carboxylic acid or ester or anhydride thereof, especially a dimer fatty acid, with a polyamine used in a stoichiometric excess, especially DETA or TETA, Mannich bases, especially phenalkamines, i.e. reaction products of phenols, especially cardanol, with aldehydes, especially formaldehyde, and polyamines, or aromatic polyamines such as, in particular, 4,4'-, 2,4'- and/or 2,2'-diaminodiphenylmethane, 2,4(6)-tolylenediamine, 3,5-dimethylthio-2,4(6)-tolylenediamine or 3,5-diethyl-2,4(6)-tolylenediamine.

Especially preferred amines having at least four aliphatic amine hydrogens are preferably selected from the group consisting of TMD, IPDA, 1,3-bis(aminomethyl)cyclohexane, MXDA and polyoxypropylenediamines having an average molecular weight Mₙ within a range from 200 to 500 g/mol. Particular preference is given to a combination of two or more of these further amines.

It can be advantageous if the above-mentioned amines are combined with at least one amine of the formula (I)

Z-NH-A-NH-CH₂-Y (I)

where
A is a divalent C₂ to C₁₅ alkylene, cycloalkylene or arylalkylene radical optionally containing one or more nitrogen atoms or ether groups, and
Z is H or ---CH₂-Y, and
Y is H or a C₁ to C₁₂ alkyl, cycloalkyl, arylalkyl or aryl radical,
where the amine of the formula (I) contains a total of at least 8 carbon atoms.

In the amine of the formula (I), A is preferably selected from the group consisting of 1,2-ethylene, 1,2-propylene, 1,3-propylene, 1,4-butylene, 1,3-butylene, 2-methyl-1,2-propylene, 1,3-pentylene, 1,5-pentylene, 2,2-dimethyl-1,3-propylene, 1,6-hexylene, 2-methyl-1,5-pentylene, 1,7-heptylene, 1,8-octylene, 2,5-dimethyl-1,6-hexylene, 1,9-nonylene, 2,2(4),4-trimethyl-1,6-hexylene, 1,10-decylene, 1,11-undecylene, 2-butyl-2-ethyl-1,5-pentylene, 1,12-dodecylene, 1,2-cyclohexylene, 1,3-cyclohexylene, 1,4-cyclohexylene, (1,5,5-trimethylcyclohexan-1-yl)methane-1,3, 4(2)-methyl-1,3-cyclohexylene, 1,3-cyclohexylenebis(methylene), 1,4-cyclohexylenebis(methylene), 1,3-phenylenebis(methylene), 1,4-phenylenebis(methylene), 3-oxa-1,5-pentylene, 3,6-dioxa-1,8-octylene, 4,7-dioxa-1,10-decylene, 3-aza-1,5-pentylene, 3,6-diaza-1,8-octylene, 4,7-diaza-1,11-decylene and 3-aza-1,6-hexylene.

A is preferably free of nitrogen atoms and free of ether groups.

A is preferably a C₂ to Ca alkylene radical, especially 1,2-ethylene, 1,2-propylene, 1,3-propylene, 1,4-butylene, 1,3-butylene, 1,5-pentylene, 1,6-hexylene, 2-methyl-1,5-pentylene, 1,7-heptylene or 1,8-octylene. These amines of the formula (I) enable particularly good leveling properties.

A is more preferably 1,2-ethylene. These amines of the formula (I) enable particularly good levelling, particularly good deaeration and particularly rapid curing.

Z is preferably H.

In the amine of the formula (I), Y is preferably selected from the group consisting of H, methyl, ethyl, propyl, isopropyl, butyl, pentyl, heptyl, hept-2-yl, phenyl, naphthyl and cyclohexyl.

More preferably, Y is phenyl or cyclohexyl, especially phenyl. Such an amine of the formula (I) enables particularly rapid curing and particularly attractive surfaces having high gloss.

Most preferred is an amine of formula (I) in which A is 1,2-ethylene, Z is H and Y is phenyl.

This amine of the formula (I) is N-benzylethane-1,2-diamine. It enables epoxy resin coatings containing carbon nanotubes and having particularly good leveling and particularly even, well-deaerated surfaces and very particularly rapid curing.

An amine of the formula (I) in which Z is H may contain fractions of dialkylated amine, i.e. the corresponding amine in which Z is ---CH₂-Y. It preferably contains not more than 30% by weight, more preferably not more than 20% by weight, especially not more than 15% by weight, of dialkylated amine. Most preferably, an amine of the formula (I) in which Z is H is used in a purity of at least 95% by weight.

The amine of formula (I) is preferably prepared by partial alkylation of at least one amine of formula H₂N-A-NH₂ with at least one alkylating agent.

The amine of the formula (I) may be in free form or in the form of the adduct with at least one epoxy resin, especially at least one aromatic diepoxide having an epoxy equivalent weight in the range from 110 to 200 g/mol, preferably 150 to 200 g/mol, especially a bisphenol A diglycidyl ether and/or bisphenol F diglycidyl ether. This adduct is in particular prepared with such an excess of amine that at least 1.3 mol of amine of the formula (I) was used per epoxy group.

Preference is given to using the amine of the formula (I) in such an amount that at least 5%, preferably at least 10%, of all amine hydrogens present in the epoxy resin coating come from amines of the formula (I). In particular, 5% to 70%, preferably 5% to 50%, of all amine hydrogens present come from amines of the formula (I). This likewise includes the amine hydrogens from adducted amine of the formula (I).

Preferably 5% to 50% of all amine hydrogens present in the epoxy resin coating come from amines of the formula (I), and at least one further amine having at least four aliphatic amine hydrogens is present.

The electrically conductive epoxy resin coating comprises at least one liquid epoxy resin. Preferably said at least one liquid epoxy resin is different from the before mentioned reactive diluent **RD** and epoxy-modified plant oil **EPO.** Furthermore, the before mentioned reactive diluent **RD** are preferably different from said epoxy-modified plant oil **EPO.**

Preferred liquid epoxy resin have the formula (V)

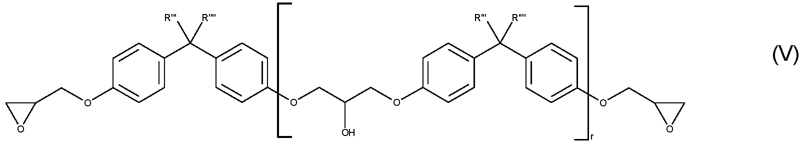

In this formula, the substituents R‴ and R"" are each independently H or CH₃, preferably H. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof).

Most preferably, the at least one liquid epoxy resin are diglycidyl ethers of bisphenol F. Such liquid resins are available, for example, as Araldite^{®} GY 250, Araldite^{®} PY 304, Araldite^{®} GY 282 (Huntsman), or D.E.R. ^{™} 331, or D.E.R. ^{™} 330 (Olin), or Epikote 828 (Hexion).

Moreover, so-called novolacs are suitable liquid epoxy resin. These have in particular the following formula: 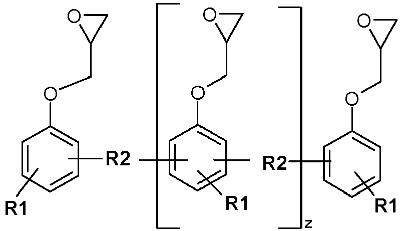 with **R2=** 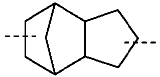 or CH₂, **R1** = H or methyl and z = 0 to 7.

In particular, they are phenol or cresol novolacs (**R2** = CH₂).

Such liquid epoxy resin are commercially available under the trade names EPN or ECN as well as Tactix^{®} 556 from Huntsman or under the product line D.E.N.^{™} from Dow Chemical.

Most preferably, the liquid epoxy resin is a liquid epoxy resin of the formula (I), wherein the substituents R‴ and R"" are each H and the index r has a value of less than 0.2.

Preferably, the at least one liquid epoxy resin is present in an amount in the range from 15 - 75 wt.-%, preferably 20 - 50 wt.-%, more preferably 30 - 40 wt.-%, based on the total weight of the electrically conductive epoxy resin coating.

Suitable accelerators are especially acids or compounds hydrolyzable to acids, especially organic carboxylic acids such as acetic acid, benzoic acid, salicylic acid, 2-nitrobenzoic acid, lactic acid, organic sulfonic acids such as methanesulfonic acid, p-toluenesulfonic acid or 4-dodecylbenzenesulfonic acid, sulfonic esters, other organic or inorganic acids, such as phosphoric acid in particular, or mixtures of the abovementioned acids and acid esters; nitrates such as calcium nitrate in particular; tertiary amines such as in particular 1,4-diazabicyclo[2.2.2]octane, benzyldimethylamine, α-methylbenzyldimethylamine, triethanolamine, dimethylaminopropylamine, imidazoles such as in particular N-methylimidazole, N-vinylimidazole or 1,2-dimethylimidazole, salts of such tertiary amines, quaternary ammonium salts, such as benzyltrimethylammonium chloride in particular, amidines, such as 1,8-diazabicyclo[5.4.0]undec-7-ene in particular, guanidines, such as 1,1,3,3-tetramethylguanidine in particular, phenols, especially bisphenols, phenolic resins or Mannich bases such as in particular 2-(dimethylaminomethyl)phenol, 2,4,6-tris(dimethylaminomethyl)phenol or polymers produced from phenol, formaldehyde and N,N-dimethylpropane-1,3-diamine, phosphites such as in particular di- or triphenyl phosphites, or compounds having mercapto groups.

Preference is given to acids, nitrates, tertiary amines or Mannich bases, especially salicylic acid, calcium nitrate or 2,4,6-tris(dimethylaminomethyl)phenol, or a combination of these accelerators.

Suitable fillers are, in particular, selected from the group consisting of ground or precipitated calcium carbonate, baryte (heavy spar), talc, quartz powder, quartz sand, silicon carbide, iron mica, dolomite, wollastonite, kaolin, mica (potassium aluminum silicate), molecular sieve, aluminum oxide, zinc oxide, aluminum hydroxide, magnesium hydroxide, silica, cement, gypsum, fly ash, carbon black, graphite, metal powders such as aluminum, copper, iron, zinc, silver or steel, PVC powder and hollow beads.

Preferred fillers are selected from the group consisting of calcium carbonate, talc, quartz powder, quartz sand, dolomite, wollastonite and kaolin,
especially calcium carbonate, quartz powder and quartz sand. Such fillers, because they do not have too high a specific weight, barely sink on application and during curing, which enables a largely homogeneous cured coating having particularly uniform electrical conductivity.

Preferably, the fillers are present in an amount in the range from 15 - 70 wt.-%, preferably 20 - 50 wt.-%, more preferably 25 - 40 wt.-%, based on the total weight of the electrically conductive epoxy resin coating.

Preferably, the amount of plasticizers in the electrically conductive epoxy resin coating is low. Said plasticizers are preferably selected from the list consisting of phthalates, preferably dioctyl phthalate (DOP) and diisononyl phthalate (DINP); adipates, preferably diethylhexyl adipate (DEHA); and benzoate esters, preferably diethylene glycol dibenzoate.

Preferably, the amount of said plasticizers is less than 5 wt.-%, preferably less than 2 wt.-%, more preferably less than 1 wt.-%, most preferably less than 0.1 wt.-%, based on the total weight of the electrically conductive epoxy resin coating. Most preferably, the electrically conductive epoxy resin coating is free of plasticizers.

Preferably, the amount of thinners in the electrically conductive epoxy resin coating is low.

Suitable thinners are selected from the list consisting of xylene, 2-methoxyethanol, dimethoxyethanol, 2-ethoxyethanol, 2-propoxyethanol, 2-isopropoxyethanol, 2-butoxyethanol, 2-phenoxyethanol, 2-benzyloxyethanol, benzyl alcohol, ethylene glycol, ethylene glycol dimethyl ether, ethylene glycol diethyl ether, ethylene glycol dibutyl ether, ethylene glycol diphenyl ether, diethylene glycol, diethylene glycol monomethyl ether, diethylene glycol monoethyl ether, diethylene glycol mono-n-butyl ether, diethylene glycol dimethyl ether, diethylene glycol diethyl ether, diethylene glycol di-n-butyl ether, propylene glycol butyl ether, propylene glycol phenyl ether, dipropylene glycol, dipropylene glycol monomethyl ether, dipropylene glycol dimethyl ether, dipropylene glycol din-butyl ether, 2,2,4-trimethylpentane-1,3-diol monoisobutyrate, diphenylmethane, diisopropylnaphthalene, mineral oil fractions, for example Solvesso^{®} grades (from Exxon), alkylphenols such as tert-butylphenol, nonylphenol, dodecylphenol, cardanol (from cashew nut shell oil, containing 3-(8,11-pentadecadienyl)phenol), styrenized phenol, bisphenols, aromatic hydrocarbon resins, especially types containing phenol groups, alkoxylated phenol, especially ethoxylated or propoxylated phenol, especially 2-phenoxyethanol, adipates, sebacates, phthalates, benzoates, organic phosphoric or sulfonic esters or sulfonamides. Particular preference is given to benzyl alcohol. Preferred thinners have a boiling point of less than 200°C.

Preferably, the amount of said thinners is less than 5 wt.-%, preferably less than 2 wt.-%, more preferably less than 1 wt.-%, most preferably less than 0.1 wt.-%, based on the total weight of the electrically conductive epoxy resin coating. Most preferably, the electrically conductive epoxy resin coating is free of thinners.

Suitable surface-additives are especially defoamers, deaerating agents, wetting agents, dispersants, leveling agents or dispersed paraffin wax. The epoxy resin coating preferably contains a combination of such additives.

Suitable stabilizers are especially stabilizers against UV radiation or heat.

The epoxy resin coating optionally contains further auxiliaries and additives, especially
- pigments, especially titanium dioxide, iron oxides or chromium(III) oxide,
- compounds having mercapto groups, especially liquid mercaptan-terminated polysulfide polymers, mercaptan-terminated polyoxyalkylene ethers, mercaptan-terminated polyoxyalkylene derivatives, polyesters of thiocarboxylic acids, 2,4,6-trimercapto-1,3,5-triazine, triethylene glycol dimercaptan or ethanedithiol,
- polymers, especially polyamides, polysulfides, polyvinyl formal (PVF), polyvinyl butyral (PVB), polyurethanes (PUR), polymers having carboxyl groups, polyamides, butadiene-acrylonitrile copolymers, styrene-acrylonitrile copolymers, butadiene-styrene copolymers, homo- or copolymers of unsaturated monomers, such as, in particular, ethylene, propylene, butylene, isobutylene, isoprene, vinyl acetate or alkyl (meth)acrylates, or chlorosulfonated polyethylenes, fluorine-containing polymers or sulfonamide-modified melamines,
- rheology modifiers, especially antisettling agents,
- adhesion improvers, especially organoalkoxysilanes,
- flame-retardant substances, especially polybrominated diphenyl oxides or diphenyl ethers, phosphates such as in particular diphenyl cresyl phosphate, resorcinol bis(diphenyl phosphate), resorcinol diphosphate oligomer, tetraphenylresorcinol diphosphite, ethylenediamine diphosphate, bisphenol A bis(diphenyl phosphate), tris(chloroethyl) phosphate, tris(chloropropyl) phosphate, tris(dichloroisopropyl) phosphate, tris[3-bromo-2,2-bis(bromomethyl)propyl] phosphate, tetrabromobisphenol A, bis(2,3-dibromopropyl ether) of bisphenol A, brominated epoxy resins, ethylenebis(tetrabromophthalimide), ethylenebis(dibromonorbornanedicarboximide), 1,2-bis(tribromophenoxy)ethane, tris(2,3-dibromopropyl) isocyanurate, tribromophenol, hexabromocyclododecane, bis(hexachlorocyclopentadieno)cyclooctane or chloroparaffins,
- further conductive substances, especially doped mineral fillers, metal powders, carbon fibers, carbon black, graphite or ionic liquids, or
- further additives, especially film-forming auxiliaries or biocides.

The epoxy resin coating preferably comprises at least two components that are stored in separate containers and are mixed with one another only shortly before application.

The resin component contains at least the liquid epoxy resin and any further compounds containing epoxy groups.

The hardener component contains the at least one curing agent and any other compounds that are reactive with epoxy groups.

Carbon nanotubes dispersed in a liquid containing epoxy groups are preferably a constituent of the resin component.

The epoxy resin coating is preferably not water-based and contains only a small content of water, preferably less than 5% by weight, in particular less than 1% by weight, of water. Such a coating is particularly robust with respect to moisture.

However, it is also possible that the epoxy resin coating contains a higher content of water. In particular, the resin component or hardener component or both may be water-based.

In the epoxy resin coating, the ratio of the number of groups reactive toward epoxy groups relative to the number of epoxy groups is preferably within a range from 0.5 to 1.5, in particular 0.7 to 1.2.

The resin component and the hardener component of the epoxy resin composition are stored in separate containers. A suitable container for storage of the resin component or the hardener component is especially a bucket, a hobbock, a drum, a pouch or a cartridge. The components are storable, meaning that they can be stored prior to use for several months up to one year or longer without any change in their respective properties to a degree relevant to their use. For the use of the epoxy resin coating, the components are mixed with one another shortly before or during application. The mixing ratio between the resin component and the hardener component is preferably chosen such that the groups of the hardener component that are reactive toward epoxy groups are in a suitable ratio to the epoxy groups of the resin component, as described above. In parts by weight, the mixing ratio between the resin component and the hardener component is typically in the range from 1:10 to 10:1, preferably 1:1 to 10:1.

The components are mixed by means of a suitable method; this mixing may be done continuously or batchwise. If the mixing does not immediately precede the application, it must be ensured that not too much time passes between mixing the components and the application thereof and that application takes place within the pot life. Mixing takes place in particular at ambient temperature, which is typically within a range from about 5 to 40°C, preferably about 10 to 35°C.

Curing by chemical reaction begins with the mixing of the two components. The primary and secondary amino groups, and any further groups present that are reactive toward epoxy groups, react with the epoxy groups, resulting in ring opening (addition reaction) thereof. As a result primarily of this reaction, the epoxy resin coating polymerizes and thereby cures.

The curing preferably proceeds at ambient temperature and typically extends over a few hours to days. The duration depends on factors including the temperature, the reactivity of the constituents, the stoichiometry thereof, and the presence of accelerators.

In the freshly mixed state, the epoxy resin coating has low viscosity. The viscosity at 20°C 5 minutes after the components have been mixed is preferably within a range from 100 to 4000 mPas, preferably 200 to 3000 mPas, in particular 300 to 2000 mPa s, measured using a cone-plate viscometer at a shear rate of 10 s⁻¹.

The epoxy resin coating is applied to at least one substrate, the following substrates being particularly suitable:
- concrete, mortar, cement screed, fiber cement, brick, tile, plaster, natural rocks such as granite or marble, or sand, especially electrically conductive quartz sand;
- repair compounds or leveling compounds based on PCC (polymer-modified cement mortar) or ECC (epoxy resin-modified cement mortar);
- metals or alloys such as aluminum, iron, steel, copper, other nonferrous metals, including surface-finished metals or alloys such as galvanized or chrome-plated metals;
- asphalt or bitumen;
- plastics, such as rigid and flexible PVC, polycarbonate, polystyrene, polyester, polyamide, PMMA, ABS, SAN, epoxy resins, phenolic resins, PUR, POM, TPO, PE, PP, EPM or EPDM, in each case untreated or surface-treated, for example by means of plasma, corona or flames;
- fiber-reinforced plastics, such as carbon fiber-reinforced plastics (CFRP), glass fiber-reinforced plastics (GFRP), and sheet molding compounds (SMC);
- coated or painted substrates, especially painted tiles, coated concrete, powder-coated metals or alloys;
- coatings, paints or varnishes, especially coated floors that have been overcoated with a further floor covering layer.

If required, the substrates can be pretreated prior to application, especially by physical and/or chemical cleaning methods or the application of an activator or a primer.

The freshly mixed epoxy resin coating is applied, within its pot life, to the surface of a substrate in a layer thickness of about 0.1 to about 5 mm, typically at ambient temperature. It is applied especially by pouring onto the substrate to be coated and then spreading it evenly using, for example, a doctor blade or a rubber squeegee. It may also be applied with a brush or roller. Curing typically gives rise to homogeneous, even, glossy, nontacky, pigmented or transparent films of high hardness and robustnesss that have good adhesion to a wide variety of different substrates.

The invention further provides the cured, electrically conductive epoxy resin coating obtained from the mixed epoxy resin coating.

After curing, the epoxy resin coating has electrical conductivity within a range suitable for a constituent of an electrostatically dissipative floor system. In particular, the epoxy resin coating after curing in a layer thickness in the range from 0.3 to 3 mm has an electrical resistance to ground, determined according to DIN EN 61340-4-1, in the range of > 10³ ohms and < 10⁹ ohms, preferably >·10⁴ ohms and < 10⁸ ohms.

The epoxy resin coating of the invention is preferably used as a constituent of an electrostatically dissipative floor system. Such a floor system is especially laid in production halls or rooms where uncontrolled electrostatic discharges are problematic. These are especially rooms where electronic components are produced, stored or used, or where highly sensitive measurement systems are operated, or where combustible liquids or explosives are handled or stored, and especially climate-controlled rooms having particularly low humidity and particularly few particles in the atmosphere, such as cleanrooms, radiological facilities or operating rooms.

The invention thus further provides an electrostatically dissipative floor system comprising, from the bottom upward,
(i) at least one substrate,
(ii) optionally at least one epoxy resin primer,
(iii) at least one grounded electrical conduction system,
(iv) at least one electrically conductive epoxy resin coating, as described above.

The electrostatically dissipative floor system preferably has an overall electrical resistance to ground, determined according to DIN EN 61340-4-1, in the range of > 10³ ohms and < 10⁹ ohms, preferably > 10⁴ ohms and < 10⁸ ohms.

A suitable substrate (i) is especially concrete, optionally pretreated by means of grinding, sandblasting or shotblasting, or mortar, cement screed, fiber cement, brick, tile, gypsum, natural stones such as granite or marble, asphalt or a repair compound or leveling compound based on PCC (polymer-modified cement mortar) or ECC (epoxy resin-modified cement mortar). Preference is given to concrete, mortar or cement screed.

The substrate is preferably coated with at least one epoxy resin primer (ii). This is preferably of low viscosity and largely free of fillers. It especially serves to solidify the substrate, to close any pores and to ensure good adhesion between the substrate and the further layers. The primer is typically distributed on the substrate with a brush, a roller or a rubber squeegee. Application is effected in one or more layers, typically in an amount in the range from 0.2 to 0.5 kg/m². Commercially available products that are suitable for the purpose are, for example, Sikafloor^{®}-150, Sikafloor^{®}-151, Sikafloor^{®}-160 or Sikafloor^{®}-161 (all from Sika).

If the substrate is uneven, after the priming, the surface can be leveled by troweling with a sand-filled epoxy resin composition.

A grounded conduction system (iii) is laid onto the optionally primed and optionally leveled substrate. For the grounding, preference is given to drilling holes in the floor and securing protruding metal screws therein. A mesh of copper wires or copper ribbons is preferably laid on the screws, these being in contact with the screws, for example via metal washers that have been placed on. The equipment for this purpose and an exact description for the installing is provided, for example, in the commercially available Sikafloor^{®} conductive set (from Sika). According to the separation of the copper wires or ribbons and the grounding screws and the type of coating (iv), what is called a conductive film is additionally applied to this installation, which ensures electrical conduction between the copper wires or ribbons.

The electrical conduction system preferably comprises at least a grounded copper wire or a grounded copper ribbon and optionally at least one electrically conductive layer (v) which is in contact therewith and has an electrical resistance, determined according to DIN EN 61340-4-1, of < 10⁴ ohms, preferably > 10³ ohms and <10⁴ ohms.

Subsequently, at least an electrically conductive epoxy resin coating (iv) as described before is applied to the electrical conduction system and cured as described above. The electrically conductive epoxy resin coating (iv) may be transparent or pigmented, as described above. It is applied to the conduction system in one or more layers, especially in a layer thickness in the range from 0.1 to 5 mm, preferably 0.2 to 3 mm. It is preferably applied in just one layer in an amount in the range from 0.2 to 3 kg/m², preferably 0.3 to 2.5 kg/m².

It is preferred if no additional layer, like a sealing layer, different from the electrically conductive epoxy resin coating (iv) is placed on top of the epoxy resin coating (iv).

It is further preferred if at least one electrically conductive layer (v) which is in contact with the electrical conduction system, preferably comprising at least a grounded copper wire or a grounded copper ribbon, is placed under the electrically conductive epoxy resin coating (iv).

Said electrically conductive layer (v) has an electrical resistance, determined according to DIN EN 61340-4-1, of < 10⁴ ohms, preferably > 10³ ohms and <10⁴ ohms. Preferably said electrically conductive layer (v) is derived from a two-component epoxy composition, preferably a water-based two component epoxy composition. A possible commercially available product to obtain an electrically conductive layer (v) is Sikafloor^{®}-220 W Conductive available from Sika Germany. Such an electrically conductive layer (v) is advantageous for very high-performance systems.

It can also be advantageous if there is no electrically conductive layer (v) direct contact with the grounded conduction system (iii) that is placed under the electrically conductive epoxy resin coating (iv). In this case, the electrically conductive epoxy resin coating (iv) is preferably in direct contact with the grounded conduction system (iii). In this embodiment, the electrically conductive epoxy resin coating (iv) is preferably applied directly to at least one grounded copper wire or at least one grounded copper ribbon, and there is no electrically conductive layer in between.

This can be advantageous with respect to reduced VOC emissions due to a lack of an additional layer and reduced wait time. Omission of an electrically conductive layer (v) is possible due to the high performance of the inventive epoxy resin coating (iv) with respect to conductivity.

The floor system of the invention is preferably part of a building or of a room in a building. In particular, the floor system is present wherever uncontrolled discharges can cause damage. These are especially rooms where electronic components are produced, stored or used, or where highly sensitive measurement systems are operated, or where combustible liquids or explosives are handled or stored, and especially climate-controlled rooms having particularly low humidity and particularly few particles in the atmosphere, such as clean rooms, radiological facilities or operating rooms.

In another aspect of the invention, it was surprisingly found that removal of the carbon nanotubes **CNT** from the above-mentioned composition of the electrically conductive epoxy resin coating provides a composition well suited as a primer layer, especially for the before mentioned electrically conductive epoxy resin coating. In this aspect of the invention, the epoxy resin coating **COA** comprises:
- at least one liquid epoxy resin;
- at least one blocked isocyanate prepolymer **BIP,** preferably 1 - 7.5 wt.-%, based on the total weight of the epoxy resin coating **COA;**
- at least one polyol ester **PE** having at least three (meth)acrylate ester groups, preferably 1 - 7.5 wt.-%, based on the total weight of the epoxy resin coating **COA;**
- at least one reactive diluent **RD,** preferably 3 - 17.5 wt.-%, based on the total weight of the epoxy resin coating **COA;**
- preferably at least one epoxy-modified plant oil **EPO,** preferably 1.5 - 7.5 wt.-%, based on the total weight of the epoxy resin coating **COA.**

The mentioned liquid epoxy resin; blocked isocyanate prepolymer **BIP;** polyol ester **PE;** reactive diluent **RD** and epoxy-modified plant oil **EPO** are the same as mentioned before for the electrically conductive epoxy resin coating, with the same preferred features and preferred amount as mentioned before. This epoxy resin coating **COA** would be especially suitable for the use as an epoxy resin primer (ii), as mentioned before.

### Examples

Working examples are adduced hereinafter, which are intended to further elucidate the invention described. The invention is of course not limited to these described exemplary embodiments.

"AHEW' stands for amine hydrogen equivalent weight.

"EEW" stands for epoxy equivalent weight.

"Standard climatic conditions" ("SCC") refer to a temperature of 23 ± 1°C and a relative air humidity of 50 ± 5%.

The chemicals used were unless otherwise stated from Sigma-Aldrich Chemie GmbH.

### Substances and abbreviations used:

| | |
|---|---|
| CNT Disp. | Dispersion of 10% by weight of single wall carbon nanotubes in alkyl glycidyl ether, EEW 266 g/mol (Tuball^{®} Matrix Beta 207, from OCSiAl) |
| Araldite GY 250: | Bisphenol A diglycidyl ether, EEW 187 g/mol (from Huntsman) |
| Araldite DY-H: | Hexanediol diglycidyl ether, EEW 147 g/mol (from Huntsman) |
| EPO | Cardolite LITE 514 HP, according to formula (III), EEW 280-330 g/mol, viscosity 25 °C: 4500 mPas, Cardolite Corporation |
| RD | Epilox M 985, aliphatic diglycidyl ether (polypropylene glycol diepoxide resin), viscosity 25 °C: 40 - 90 mPas, EEW 425 - 500 g/mol, Leuna - Harze GmbH |
| PE1 | MCure 400, aliphatic tetraacrylic, viscosity 25°C: 180 mPas, Arkema |
| PE2 | OTA 480, glyceryl propoxy triacrylate, CAS number: 52408-84-1, viscosity 25°C: 70-110 mPas, Allnex |
| PIB | Desmocap 14 CNB, TDI-based blocked isocyanate prepolymer with cashew nutshell liquid as blocking agent, 2.7 % crosslinkable, blocked NCO groups, viscosity 25°C 15.000 - 35.000, Covestro |
| Chalk | Omyacarb^{®} 10 GU (from Omya) |
| Rheology modifier | Copolymer of silicone and polyalkoxy ether |
| Dispersant | Polyester-based dispersing additive |
| Fumed silica | Fumed silica (CAB-O-SIL) |
| Defoamer | Organo-modified polysiloxane |
| Pigment | Mixture of organic and inorganic pigments |
| B-EDA | N-Benzylethane-1,2-diamine, AHEW 50.1 g/eq, prepared as described below |
| D-230 | Polyoxypropylenediamine, average molecular weight 230 g/mol, AHEW 60 g/mol (Jeffamine^{®} D-230, from Huntsman) |
| Adduct B1 | Adduct of B-EDA and Araldite^{®} GY 250, AHEW 116.3 g/eq, prepared as described below |

### N-Benzylethane-1,2-diamine (B-EDA):

An initial charge of 180.3 g (3 mol) of ethane-1,2-diamine at room temperature was mixed with a solution of 106.0 g (1 mol) of benzaldehyde in 1200 ml of isopropanol and stirred for 2 hours, then hydrogenated at 80°C, hydrogen pressure 80 bar, and a flow rate of 5 ml/min in a continuous hydrogenation apparatus with a fixed bed Pd/C catalyst, and the hydrogenated solution was concentrated on a rotary evaporator at 65°C, removing unreacted ethane-1,2-diamine, water and isopropanol. The resultant reaction mixture was purified by distillation at 80°C under reduced pressure. This gave a colorless liquid having an N-benzylethane-1,2-diamine content determined by GC of > 97%.

### Adduct B1:

55.0 g of N-benzylethane-1,2-diamine (B-EDA) was heated to 80°C, and 45.0 g of Araldite^{®} GY 250 was added gradually with good stirring, keeping the temperature of the reaction mixture between 70 and 90°C. A clear, pale yellowish liquid having a viscosity at 20°C of 262 Pa·s was obtained.

For each example, the ingredients of the hardener component indicated in table 1 were mixed in the amounts indicated (in parts by weight) by means of the centrifugal mixer and stored with the exclusion of moisture.

The two components were then processed using the centrifugal mixer into a homogeneous liquid and this was tested immediately as follows:
A particleboard was primed with 0.3 kg/m² of Sikafloor^{®}-150 and stored under standard climatic conditions for 24 h, then 0.1 kg/m² of Sikafloor^{®}-220 W Conductive was applied, and the board was stored under standard climatic conditions for a further 24 h. 1.3 kg/m² of the respective epoxy resin coating shown in table 1 was applied to the board thus coated, distributed with a squeegee and rolled over with a spiked roller in the still-liquid state for deaeration.

**Appearance** was assessed on the coated particle board after a curing time of 7 days. The samples were rated by eye with the following rating system:
A "same" surface was one with average levelling and deaeration and gloss appearance
A "better" surface was one with improved leveling, deaeration and gloss appearance compared to the "same" surface.

Electrical **resistance** ("E.R." in (M Ohm) was measured at 8 points on the coated particle boards after a curing time of 7 days under standard climatic conditions against ground according to DIN EN 61340-4-1. The following rating system was used:
"-": >5 - 10 MΩ
"same": >0.4 - 5 MΩ
"+": >0.2 - 0.4 MΩ
"++": 0.01 - 0.2 MΩ

**Viscosity** was measured 5 min after the resin component and the hardener component had been mixed by means of a cone-plate viscometer at a shear rate of 10 s⁻¹ and a temperature of 20°C. The following rating system was used:
"high" is > 2000 mPas
"OK" is < 2000 - 300 mPas

**Shore D** hardness was determined to DIN 53505 on two cylindrical test specimens (diameter 20 mm, thickness 5 mm), with storage under standard climatic conditions at 25°C and 50% relative humidity. Hardness was measured here after 7 days. A value of less than 80 - 65 (= "<80") is an indication of improved impact resistance and correlates with higher flexibility.

**Impact** was measured by dropping a weight with defined mass of 1 kg and spherical head on the test specimen side from a defined height of 40 cm through a guide tube (Fa. Erichsen, model 304) onto the test specimen based on DIN EN ISO 6272. After the test, the test specimen surface is inspected for cracking and separation. The test specimen were prepared using concrete plates 300mm x 300mm x 40mm coated with the indicated composition (2 kg/m²) in table 1. The following rating system was used:
"OK" is a value of > 4Nm
"lower" is a value of < 4Nm

The results are reported in table 1. The examples designated "R" are comparative examples.

**Table 1, n.d. = not determined**

| | **R1** | **R2** | **R3** | **R4** | **R5** | **R6** | **R7** | **R8** | **R9** | **R10** | **E1** | **E2** |
|---|---|---|---|---|---|---|---|---|---|---|---|---|
| **Component A** | | | | | | | | | | | | |
| Araldite GY 250 | 32.6 | 32.6 | 32.6 | 32.6 | 32.6 | 32.6 | 32.6 | 32.6 | 27.5 | 27.5 | 25.3 | 29.6 |
| Araldite DY-H | 10 | 5.7 | 3.5 | 5.7 | 3.5 | 1.4 | 7.8 | 7.8 | | | | |
| Dispersant | 0.1 | 0.1 | 0.1 | 0.1 | 0.1 | 0.1 | 0.1 | 0.1 | 0.1 | 0.1 | 0.1 | 0.1 |
| Fumed silica | 1 | 1 | 1 | 1 | 1 | 1 | 1 | 1 | 1 | 1 | 1 | 1 |
| Defoamer | 1 | 1 | 1 | 1 | 1 | 1 | 1 | 1 | 1 | 1 | 1 | 1 |
| Chalk | 31.70 | 31.70 | 31.70 | 31.70 | 31.70 | 31.70 | 31.70 | 31.70 | 31.70 | 31.70 | 31.70 | 31.70 |
| Pigment | 7.5 | 7.5 | 7.5 | 7.5 | 7.5 | 7.5 | 7.5 | 7.5 | 7.5 | 7.5 | 7.5 | 7.5 |
| CNT Disp. | 0.1 | 0.1 | 0.1 | 0.1 | 0.1 | 0.1 | 0.1 | 0.1 | 0.1 | 0.1 | 0.1 | 0.1 |
| **EPO** | | 4.3 | 6.5 | | | | | | 4.3 | 4.3 | 4.3 | |
| **RD** | | | | 4.3 | 6.5 | 8.6 | | | 8.6 | 8.6 | 8.6 | 8.6 |
| **PE1** | | | | | | | 2.2 | | | | | |
| **PE2** | | | | | | | | 2.2 | | 2.2 | 2.2 | 2.2 |
| **PIB** | | | | | | | | | 2.2 | | 2.2 | 2.2 |

| **Component B** | | | | | | | | | | | | |
|---|---|---|---|---|---|---|---|---|---|---|---|---|
| B-EDA | 4 | 4 | 4 | 4 | 4 | 4 | 4 | 4 | 4 | 4 | 4 | 4 |
| D-230 | 4 | 4 | 4 | 4 | 4 | 4 | 4 | 4 | 4 | 4 | 4 | 4 |
| Adduct B1 | 8 | 8 | 8 | 8 | 8 | 8 | 8 | 8 | 8 | 8 | 8 | 8 |
| **Total** | 100 | 100 | 100 | 100 | 100 | 100 | 100 | 100 | 100 | 100 | 100 | 100 |
| CNT | 0.01 | 0.01 | 0.01 | 0.01 | 0.01 | 0.01 | 0.01 | 0.01 | 0.01 | 0.01 | 0.01 | 0.01 |
| Shore D | >80 | >80 | >80 | >80 | >80 | <80 | >80 | <80 | n.d. | n.d. | n.d. | n.d. |
| Impact | n.d. | n.d. | n.d. | n.d. | n.d. | n.d. | n.d. | n.d. | OK | lower | OK | OK |
| Viscosity | n.d. | n.d. | n.d. | n.d. | n.d. | n.d. | n.d. | n.d. | high | OK | OK | OK |
| Appearance | same | better | same | same | same | same | same | same | same | same | better | same |
| E.R. (M Ohm) | same | same | - | same | same | same | + | ++ | n.d. | n.d. | n.d. | n.d. |

## Claims

1. An electrically conductive epoxy resin coating comprising
- at least one liquid epoxy resin;
- carbon nanotubes **CNT,** preferably single walled carbon nanotubes (SWCNT), preferably 0.003 - 0.1 wt.-%, based on the total weight of the electrically conductive epoxy resin coating;
- at least one blocked isocyanate prepolymer **BIP,** preferably 1 - 7.5 wt.-%, based on the total weight of the electrically conductive epoxy resin coating;
- at least one polyol ester **PE** having at least three (meth)acrylate ester groups, preferably 1 - 7.5 wt.-%, based on the total weight of the electrically conductive epoxy resin coating;
- at least one reactive diluent **RD,** preferably 3 - 17.5 wt.-%, based on the total weight of the electrically conductive epoxy resin coating;
- preferably at least one epoxy-modified plant oil **EPO,** preferably 1.5 - 7.5 wt.-%, based on the total weight of the electrically conductive epoxy resin coating.

2. The epoxy resin coating as claimed in claim 1, **characterized in that** the carbon nanotubes are present in an amount in the range from 0.003 - 0.1 wt.-%, preferably 0.005 - 0.05 wt.-%, more preferably 0.0065 - 0.0125 wt.-%, based on the total weight of the electrically conductive epoxy resin coating.

3. The epoxy resin coating as claimed in any of the proceeding claims, **characterized in that** the at least one blocked isocyanate prepolymer **BIP** is present in an amount in the range from 1 - 7.5 wt.-%, preferably 1.5 - 3 wt.-%, more preferably 1.75 - 2.5 wt.-%, based on the total weight of the electrically conductive epoxy resin coating.

4. The epoxy resin coating as claimed in any of the proceeding claims, **characterized in that** the at least one blocked isocyanate prepolymer **BIP** contains ether groups, preferably, the blocked isocyanate prepolymer **BIP** is a blocked isocyanate-terminated polyether prepolymer, more preferably a blocked isocyanate-terminated polyoxyalkylene prepolymer.

5. The epoxy resin coating as claimed in any of the proceeding claims, **characterized in that** the blocked isocyanates of the blocked isocyanate prepolymer **BIP** are aromatic polyisocyanates, preferably selected from 2,4 toluene, 2,6 toluene and mixtures thereof, and/or the blocking agent for the blocked isocyanates of the blocked isocyanate prepolymer **BIP** is a phenol, preferably an alkylated phenol, more preferably selected from nonylphenol, cardol and cardanol.

6. The epoxy resin coating as claimed in any of the proceeding claims, **characterized in that** the at least one polyol ester **PE** having at least three (meth)acrylate ester groups is an alkoxylated polyol ester, preferably an ethoxylated or propoxylated polyol ester.

7. The epoxy resin coating as claimed in any of the proceeding claims, **characterized in that** the at least one polyol ester **PE** having at least three (meth)acrylate ester groups is selected from the group consisting of glycerol triacrylate, glycerol trimethacrylate, sorbitol triacrylate, sorbitol trimethacrylate, trimethylolethane triacrylate, trimethylolethane trimethacrylate, trimethylolpropane triacrylate, dimethylolpropane tetraacrylate, dimethylolpropane tetramethacrylate, trimethylolpropane trimethacrylate, ethoxylated trimethylolpropane triacrylate, ethoxylated trimethylolpropane trimethacrylate, propoxylated trimethylolpropane triacrylate, propoxylated trimethylolpropane triamethacrylate, propoxylated glycerol triacrylate, propoxylated glycerol trimethacrylate, pentaerythritol triacrylate, pentaerythritol trimethacrylate, pentaerythritol tetraacrylate, pentaerythritol tetramethacrylate, dipentaerythritol hexaacrylate, dipentaerythritol hexamethacrylate, ethoxylated pentaerythritol tetraacrylate, propoxylated pentaerythritol tetraacrylate, sucrose pentaacrylate, sucrose pentamethacrylate, sucrose tetraacrylate, sucrose tetramethacrylate, sucrose triacrylate and sucrose trimethacrylate, preferably selected from trimethylolpropane triacrylate, ethoxylated trimethylolpropane triacrylate, propoxylated pentaerythritol tetraacrylate and propoxylated glycerol triacrylate most preferably propoxylated glycerol triacrylate.

8. The epoxy resin coating as claimed in any of the proceeding claims, **characterized in that** the at least one polyol ester **PE** having at least three (meth)acrylate ester groups is present in an amount in the range from 1 - 7.5 wt.-%, preferably 1.5 - 3 wt.-%, more preferably 1.75 - 2.5 wt.-%, based on the total weight of the electrically conductive epoxy resin coating.

9. The epoxy resin coating as claimed in any of the proceeding claims, **characterized in that** at least one reactive diluent **RD** is a poly(alkyleneglycol) diglycidylether, more preferably a poly(propyleneglycol) diglycidylether.

10. The epoxy resin coating as claimed in any of the proceeding claims,
**characterized in that** at least one reactive diluent **RD** is of the formula (II) 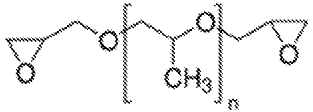
wherein the index n is from 3 to 25, preferably from 7 to 20, more preferably from 9 to 15.

11. The epoxy resin coating as claimed in any of the proceeding claims, **characterized in that** the at least one reactive diluent **RD** is present in an amount in the range from 3 - 17.5 wt.-%, preferably 6-11 wt.-%, more preferably 7.5 - 9.5 wt.-%, based on the total weight of the electrically conductive epoxy resin coating.

12. The epoxy resin coating as claimed in any of the proceeding claims, comprising at least one epoxy-modified plant oil **EPO,** preferably selected from cardanol-modified epoxy resin, dimer-acid-modified epoxy resin, epoxidated soybean oil, epoxidated linseed oil, epoxidated castor oil and epoxidated palm oil, preferably cardanol-modified epoxy resin; preferably the epoxy-modified plant oil **EPO** is present in an amount in the range from 1.5 - 7.5 wt.-%, preferably 2.5 - 6.5 wt.-%, more preferably 3.5 - 5.5 wt.-%, based on the total weight of the electrically conductive epoxy resin coating.

13. The epoxy resin coating as claimed in any of the proceeding claims, **characterized in that** it contains 15 - 70 wt.-%, preferably 20 - 50 wt.-%, more preferably 25 - 40 wt.-% of at least one filler, based on the total weight of the electrically conductive epoxy resin coating, preferably selected from the group consisting of calcium carbonate, talc, quartz powder, quartz sand, dolomite, wollastonite and kaolin.

14. A cured electrically conductive epoxy resin coating obtained from the mixed epoxy resin coating as claimed in any of claims 1 to13.

15. An electrostatically dissipative floor system comprising, from the bottom upward,
(i) at least one substrate,
(ii) optionally at least one epoxy resin primer,
(iii) at least one grounded electrical conduction system,
(iv) at least one electrically conductive epoxy resin coating as claimed in claim 14.

16. The floor system as claimed in claim 15, **characterized in that** electrical resistance to ground, determined to DIN EN 61340-4-1, is in the range of > 10³ ohms and < 10⁹ ohms, preferably > 10⁴ ohms and < 10⁸ ohms.

17. An epoxy resin coating **COA** comprising
- at least one liquid epoxy resin;
- at least one blocked isocyanate prepolymer **BIP,** preferably 1 - 7.5 wt.-%, based on the total weight of the epoxy resin coating **COA;**
- at least one polyol ester **PE** having at least three (meth)acrylate ester groups, preferably 1 - 7.5 wt.-%, based on the total weight of the epoxy resin coating **COA;**
- at least one reactive diluent **RD,** preferably 3 - 17.5 wt.-%, based on the total weight of the epoxy resin coating **COA;**
- preferably at least one epoxy-modified plant oil **EPO,** preferably 1.5 - 7.5 wt.-%, based on the total weight of the epoxy resin coating **COA.**
